# EUROPEAN PATENT SPECIFICATION

(11) **EP 4 368 998 B1**
(45) Date of publication and mention of the grant of the patent: **25.02.2026**
(21) Application number: 24157042.3
(22) Date of filing: 12.04.2021
(51) Int. Cl.: G01N 35/02

(54) **APPARATUS FOR THE AUTOMATED DIAGNOSTIC ANALYSIS OF LIQUID SAMPLES**
VORRICHTUNG ZUR AUTOMATISCHEN DIAGNOSTISCHEN ANALYSE VON FLÜSSIGEN PROBEN
APPAREIL POUR L'ANALYSE DIAGNOSTIQUE AUTOMATISÉE D'ÉCHANTILLONS LIQUIDES

(30) Priority: 30.04.2020 DE 102020111869
(43) Date of publication of application: 15.05.2024
(62) Divisional of application: 21719086.7
(73) Proprietor: Diasys Technologies S.A.R.L., 34790 Grabels (FR)
(72) Inventor: Fink, Stefan, 34090 Montpellier (FR); Pardieu, Arnauld, 34090 Montpellier (FR); Martel, Thierry, 34830 Jacou (FR)
(74) Representative: WSL Patentanwälte Partnerschaft mbB

(56) References cited:
- WO-A1-2019/010015
- CN-A- 109 580 595
- US-A1- 2007 038 411
- US-A1- 2019 346 469
- US-A1- 2020 011 857

## Description

The present invention refers to an apparatus for the automated analysis of liquid samples, wherein said apparatus has an analysis area, comprising a sample tray for receiving sample containers, at least one reagent tray for receiving reagent containers, at least one reaction tray for receiving reaction vessels, and at least one measuring device for measuring a physical or chemical property of a liquid sample treated with a reagent in a reaction vessel.

In the context of increasing automation in the field of medical and veterinary medical diagnostics, apparatuses for the automated analysis of liquids, so-called analyzers, are being widely used. Such analyzers are designed for automatically taking a reagent from a reagent container and for combining said reagent with a sample to be analyzed for carrying out the analysis procedure in a reaction vessel. For that purpose, analyzers usually have a sample tray, a reagent tray and a reaction tray providing slots for receiving and holding the respective containers.

The step of removing reagent or sample and transferring it into a reaction vessel is usually performed by an automatic pipetting device. Such an automatic pipetting device frequently includes a pipetting arm having a pipetting needle, which is connected to a pump unit for drawing up liquid into the needle and ejecting the liquid from the needle again. The pipetting arm can be moved either in XY directions or by rotation over a working area, where the sample tray, the reagent tray and/or the reaction tray are located.

Typically, analyzers include a measuring device for determining the physical or chemical parameter (process parameter) of a reaction mixture in a reaction vessel. Said measuring devices perform measurement technologies, such as spectrophotometry, colorimetry, ion selective electrode, coagulation and immunoassays.

The area covered by the afore-mentioned devices for performing the diagnostic analysis is the analysis area, where the sample tray, the at least one reagent tray, the at least one reaction tray, the measuring devices and the pipetting devices for transferring liquid between the other devices are located.

One example for an analyzer is disclosed in WO 2011/061118. For achieving a maximum possible sample throughput this analyzer has precisely three rotatable discs, namely a sample disc, a reagent disc and a reaction disc, at least three pipetting devices and a measuring device. For the purpose of improving efficiency the apparatus is operated in successive operating cycles with defined modes of action, respectively.

CN 109 580 595 A discloses a reaction disk mechanism, comprising a rotatable reaction carrier tray capable of accommodating a cuvette, wherein the heating structure includes a thermostatic seat and a heating member.

US 2020/011857 A1 discloses a thermally regulated incubator for use in an immunoassay, comprising a fixed base, an incubation ring comprising a body configured to hold a plurality of cuvettes, rotatably coupled to the fixed base.

US 2007/038411 A1 discloses an immunoanalyzer including a cuvette incubation ring having a plurality of slots on an inner circumference of the incubation ring, each slot being configured to hold a sample cuvette and a drive mechanism to rotate the ring and a plurality of pipettes configured to interact with cuvettes in the cuvette incubation ring at predetermined locations.

WO 2019/010015 A1 discloses an apparatus having a reaction carousel, which is rotatable.

US 2019/346469 A1 discloses a reaction disk being driven by a driving mechanism so as to repeatedly start and stop rotation in the circumferential direction at a certain cycle, whereby the reaction cuvettes are intermittently transferred.

There is a continuous need for increasing the efficiency of automation in analyzers. Further, there is a need to minimize the size of the apparatus design in order to save space in the laboratories, where it shall be run. In addition, it is desired to reduce the workload of the operator who runs the analyzer.

The above-described object is attained by various aspects which are described in detail hereinafter and which usually have in common that the disclosed apparatus comprises an analysis area, characterized in that the analysis area comprises
- a sample tray for receiving sample containers containing at least one liquid sample,
- at least one reagent tray for receiving reagent containers containing at least one reagent,
- at least one reaction tray for receiving reaction vessels,
- at least one measuring device for measuring a physical or chemical property or the liquid sample treated with a reagent in a reaction vessel, and
- at least one pipetting device for transferring liquid sample from sample containers in the sample disc to the reaction vessels and at least one pipetting device for transferring reagent from reagent containers in the reagent disc to the reaction vessels.

The invention claimed is disclosed below in the section "Second aspect of the invention: Static reaction ring".

The term "sample" is used in connection with the present invention to denote any material which is prepared for the purposes of the analysis operation and which contains a substance to be diagnostically analyzed. Examples for samples are whole blood, purified blood, blood preserves, etc. as well as other body liquids, such as urine or liquor.

The disclosed apparatus is capable of performing different analysis processes. In preferred embodiments, the physical or chemical property measured by at least one of the measuring devices is selected from a result of an immunoassay, a result of a clinical chemistry assay, a result of a coagulation assay or a result of an ion selective electrode assay in a reaction vessel.

### Aspect No. 1: Arrangement of components (alternative solution, not claimed)

In order to increase efficiency, to minimize the size of the apparatus and in order to reduce the workload of the operator who runs the analyzer. The present invention provides a number of technical solutions.

According to the first aspect, there is disclosed an apparatus for the automated analysis of liquid samples, wherein said apparatus comprises an analysis area, characterized in that the analysis area comprises a sample tray for receiving sample containers, at least two reagent trays for receiving reagent containers, at least two reaction trays for receiving reaction vessels, and at least two measuring devices for measuring a physical or chemical property,
- wherein the sample tray is arranged in the center of the analysis area,
- the at least two reaction trays are arranged adjacent to the sample tray,
- the at least two reagent trays are arranged adjacent to the reaction trays and
- the at least two measuring devices are arranged adjacent to the reaction trays,
wherein between the sample disc and each of the at least two reaction trays there is a pipetting device for transferring liquid sample from sample containers in the sample tray to the reaction vessels in the reaction trays, and wherein between each of the at least two reagent trays and their corresponding reaction trays there is a pipetting device for transferring reagent from reagent containers in the reagent trays to the reaction vessels in the reaction trays.

According to a preferred embodiment the disclosed apparatus is characterized in that
- the sample tray is in the form of a rotatable sample disc,
- the at least two reagent trays are in the form of rotatable reagent discs,
- the at least two reaction trays are either in the form of a rotatable reaction disc being arranged adjacent to the sample tray or in the form of a static reaction ring,
- wherein the pipetting devices are in the form of swiveling pipetting arms having an axis of rotation on one end of the pipetting arm, about which the other end of the pipetting arm is movable along a circular path, wherein the axis of rotation of the pipetting devices is located between the sample disc and each reaction disc/ring or between each reagent disc and its corresponding reaction disc/ring.

According to the first aspect, the sample tray is preferably provided in the form of a rotatable sample disc being arranged in the center of the analysis area. The "analysis area" is the area of the disclosed apparatus, where the sample tray, the reagent trays, the reaction trays and the pipetting devices are located. In preferred embodiments the analysis area is a plane, where said devices are located side by side. The "center" of the analysis area is defined by a tetragon, pentagon, hexagon or higher polygon formed by imaginary straight lines connecting the axes of rotation of the reagent trays and the reaction trays. According to the first aspect, the sample tray is arranged in the center of the analysis area, if the axis of rotation of the sample tray crosses the center of the analysis area being defined by the tetragon, pentagon, hexagon or higher polygon formed by imaginary straight lines connecting the axes of rotation of the reagent trays and the reaction trays.

In the present specification the term "disc" refers to circular trays providing slots for receiving liquid containers, such as sample containers, reagent containers and reaction vessels. In contrast to that, the term "ring" refers to specific circular liquid container trays, wherein in a perspective on the circular tray from above the ring body expands between two concentric circles, thereby resulting in a center hole, the size of which being defined by the inner radius of the ring, wherein the inner radius of the ring is at least 30% of the outer radius of the ring.

In one embodiment, the sample tray is in the form of a sample disc having slots for receiving sample containers, said slots being arranged side by side along the outer circumferential edge of the disc. In an alternative embodiment, the sample tray is in the form of a sample disc having receiving pockets for receiving longish sample container racks, said racks having 2 to 20 slots for receiving sample containers, said slots being arranged side by side along the central longitudinal axis of the racks, wherein the receiving pockets are oriented radially on the sample disc.

A "pipetting device" according to the present specification has a pipetting needle, which is connected to a pumping unit, with which a liquid can be drawn into the pipetting needle and can also be expelled again from the pipetting needle. In preferred embodiments the pipetting device comprises a swiveling pipetting arm. On one end of the swiveling arm there is an axis of rotation, about which the other end of the pipetting arm is movable along a circular path, thereby defining the working zone of the pipetting device. By this, a pipetting needle can be moved to the reagent containers, sample containers and/or reaction vessels.

Preferably, the axis of rotation of at least one of the pipetting devices is located between the sample disc and each reaction disc or reaction ring. Preferably, the axis of rotation of at least one other pipetting device is located between each reagent disc and its corresponding reaction disc or reaction ring.

Due to the arrangement of components according to the specific aspect mentioned above, it is possible to have at least two different diagnostic analysis processes performed in the same analyzer. Particularly, it is possible to combine an immunoassay and a clinical chemistry assay in the same analyzer, wherein the two different analysis processes can be performed because there are at least two reagent trays for receiving reagent containers being required for the respective analysis procedures. Further, there are two separate reaction trays for each analysis procedure, and there are at least two measuring devices as required for the respective procedures. Accordingly, all these devices are provided at least in duplex. However, there is only one single sample tray, which is arranged in the center of the analysis area. Therefore, two different analysis processes can be performed on the samples provided in just one sample tray.

In a preferred embodiment the analysis area is arranged in a housing, and in an even more preferred embodiment there is provided a loading opening in the housing of the apparatus, said loading opening being for receiving sample containers and reagent containers either individually or prepacked in racks, wherein the loading opening comprises a robotic arm for transporting the sample containers and reagent containers either individually or in the form of prepacked racks from the loading opening to the sample tray and/or the reagent trays.

The loading opening including the robotic arm provides the beneficial effect that an operator of the analysis apparatus does not have to insert new samples and/or new reagents to the sample tray or the reagent trays by hand. Usually, substituting sample and/or reagent by hand requires stopping all moving actions in the analysis area in order to avoid any contact with moving parts, such as pipetting arms and/or rotating discs. Apparently, stopping all moving actions in the analysis area results in delays in processing. Therefore, having a loading opening comprising a robotic arm for transporting the sample containers and reagent containers to the sample tray and/or reagent trays is beneficial in that any motion of the robotic arm can be coordinated with any automated motion in the analysis area.

Further, the robotic arm provides the beneficial effect that liquid containers may be transferred from one liquid container tray to the other, if required. For instance, calibration liquids or controls are usually placed in sample containers on the sample tray in order to have them included in the analysis process. However, between the calibration steps, where the sample containers containing the calibration liquid or control, have to be placed in the sample tray, it is preferable to have the calibration liquid/control cooled. For that purpose, the robotic arm may transfer the sample containers containing the calibration liquid/control from the sample tray, which usually is not cooled, to one of the reagent trays, which usually are cooled.

In some embodiments, the apparatus comprises an access control unit for coordinating both, the access to the central sample tray by the robotic arm in the loading zone, and the access to the central sample tray by the analytical components arranged all around. Particularly, the control unit decides about the rules of access and the timeslots allowed for the different requesting units (robotic arm, analytical units).

The controlling unit is connected to the different components of the analyzer via a signal transmission connection, such as through wire or bluetooth. Via this connection the robotic arm and the analytical units (e.g. immunoassay unit, clinical chemistry unit) may communicate. Particularly, via said connection the robotic arm and the analytical units can request time slots for access to the central sample tray in order to either place a sample container or sample container rack in the sample tray or to remove it from the same or to take an aliquot of a sample in a sample container that is placed in the sample tray. Preferably, the time slot requests are associated with a period attribute, said period attribute defining the time period, when the time slot is required. Even more preferred, the time slot requests are further associated with a priority attribute, said priority attribute defining at least two levels of priority (e.g. high/low), wherein a high level of priority indicates that assigning a time slot within the defined time period is essential for proper operation, and wherein a low level of priority indicates that assigning a time slot within the defined time period is not essential for proper operation. The control unit will then analyze all requests, optionally including time period and/or priority level attributes and calculate an optimum operation chart that assigns specific time slots for each access request. Finally, the relevant information on the respective time slot is communicated by the control unit to each of the requesting units.

In those embodiments, where there is a housing, said housing is formed by floor, ceiling, rear, side, and front walls. In preferred embodiments the loading opening is arranged in the front wall of the housing. Preferably the loading opening is arranged in the middle between the left and the right edge of the front wall.

In some embodiments the loading opening is designed for receiving new sample containers and/or new reagent containers to be placed by the operator of the analyzer in the loading opening either individually or in the form of prepacked racks by hand. The robotic arm may then pick up the containers/racks and transport the same to the sample tray and/or reagent trays. *Vice versa* empty containers/racks may be taken by the robotic arm from the sample tray and/or reagent trays and be transported to the loading opening, where the operator may remove the same. Consequently, the "loading opening" of is not only a "loading opening" but also an "unloading opening".

In a specific embodiment, the apparatus comprises a conveyor for transporting sample containers and/or reagent containers either individually or in the form of prepacked racks to or from the loading opening. The conveyor extends horizontally from the loading opening to the left and/or the right along the wall of the housing where the loading opening is arranged.

In the present application the term "loading opening" refers to an area in a wall of the apparatus, where the sample/reagent containers/racks may be placed either by an operator or by a conveyor in order to have the same picked by the robotic arm. In contrast to that the term "loading zone" refers to an area on a conveyer outside the loading opening, where the operator may place sample/reagent containers/racks.

In some embodiments, one end of the conveyor is outside the loading opening, whereas the other end of the conveyor reaches into the loading opening, wherein at the end outside the loading opening, there is the loading zone, where it is possible to place a number of sample containers and/or reagent containers either individually or in the form of prepacked racks on the conveyor, and wherein said conveyor then transports said containers/racks into the loading opening one after the other. Further, such conveyor allows transporting used or even empty sample containers and/or reagent containers that have been taken from the sample disc or a reagent disc and have been placed by the robotic arm in the loading opening to the outside end of the conveyor. In those cases, the conveyor is bidirectional and the loading zone is also an unloading zone.

In other embodiments, one end of the conveyor is outside on the left of the loading opening, whereas the other end of the conveyor reaches through the loading opening and extends from the loading opening to the right along the wall. In those embodiments, loading zone and unloading zone of the conveyor are separate, namely on one side from the loading opening there is the loading zone, whereas on the opposite side there is the unloading zone.

In specific embodiments there are two individual conveyors on the same horizontal level, one on the left side and one on the right side, meeting in the loading opening. In another specific embodiments there are three individual conveyors on the same horizontal level, one starting on the left side from the loading opening, one starting on the right side from the loading opening and one being located inside the loading opening.

In specific embodiments there is at least one horizontal conveyor reaching to an edge of the wall of the analyzer housing, where the loading opening is located, wherein said conveyor is for transferring liquid containers either individually or placed on racks to a second analyzer standing right beside the edge of the wall of the analyzer housing. Provided said second analyzer is an analyzer according to the present specification, including a conveyor reaching from the edge of the wall of the analyzer housing to a loading opening, the liquid containers may be transferred from the first analyzer to the second analyzer for further analysis.

In specific embodiments two or even more of the disclosed analyzers share one conveyor or a combination of a number of horizontally aligned conveyors for transferring liquid containers either individually or placed on racks from one analyzer to the other.

The term "robotic arm" refers to a movable transport device having an end effector for transporting sample containers and/or reagent containers either individually or in the form of racks being loaded with sample containers and/or reagent containers. In one embodiment, the robotic arm has a swiveling element, through one end of which an axis of rotation passes. About said axis of rotation the end effector, which is, referring to the axis of rotation, arranged on the opposing end of the swiveling element, can move along a circular path.

In a further preferred embodiment, the swiveling arm can be moved along a vertical axis, and in a further preferred embodiment, the swiveling element or the entire robotic arm can be moved along a horizontal axis. Particularly, it is preferred that the swiveling element can be moved along said vertical axis and along said horizontal axis.

All potential movements around the axis of rotation, along the vertical axis and along the horizontal axis define the working zone of the robotic arm, wherein in said working zone the end effector can be moved to sample containers and/or reagent containers in the loading opening and to slots for receiving sample containers or reagent containers in the sample tray and/or reagent trays. In order to minimize the required working zone, it is preferred to have the axis of rotation located between the sample disc and the at least two reagent discs.

In a specific embodiment, the robotic arm comprises an end effector having at least two fingers movable relative to each other for grabbing and transporting the sample containers and reagent containers, either individually or in the form of prepacked racks.

In specific embodiments of the present specification, the housing of the analysis apparatus comprises a base and an openable hood, wherein the analysis area is arranged on top of the base, and wherein the hood - in its closed state - covers the analysis area entirely. In those embodiments, the loading opening is preferably arranged in the front wall of the base or the hood or extends across both, the front wall of base and hood.

Irrespective which of the afore-mentioned alternatives is realized, the loading opening allows loading samples and/or reagents to the analysis apparatus without opening the hood. Further, in the loading opening there may be placed samples and/or reagents at any time. There is no need to wait for a particular time slot, when it is possible to load samples and/or reagents to the analyzer. Whenever there is a time slot for loading samples or reagents to the corresponding trays in the analyzer, the robotic arm may grab a sample or reagent from the loading zone and transport the same to the corresponding tray.

In order to distinguish between samples and to distinguish between different reagents, the sample containers and reagent containers may have a label with a 1D code (barcode), 2D code (matrix code) or RFID (Radio-frequency identification). Accordingly, in a preferred embodiment, there is provided a 1D code reader, a 2D code reader and/or an RFID reader in the loading zone for identifying samples and/or reagents the operator places in the loading zone. Before transporting a container to its destination, the robotic arm moves a grabbed container to the reader, and according to the information read out from the code, the robotic arm performs the corresponding transporting action.

In preferred embodiments the controlling unit is connected to the 1D code reader, a 2D code reader and/or an RFID reader in the loading zone via a signal transmission connection, such as through wire or bluetooth. Via this connection the controlling unit may receive information on the respective containers being placed in the loading opening. According to said information, the controlling unit can decide whether to place the container in the sample tray or one of the reagent trays. The information on the designated location of the container is then transmitted by the controlling unit to the robotic arm.

In some embodiments, each reagent container is placed individually in the loading opening or onto the conveyor. In other embodiments, the reagent containers are placed on a reagent container rack and subsequently said rack is placed in the loading opening or on the conveyor.

Alternatively, the robotic arm either grabs the reagent container, but leaves the reagent rack on the conveyor, or the robotic arm grabs the entire rack including the reagent containers. The same alternatives apply to grabbing the sample containers/sample container racks.

In some embodiments, the sample tray, the reagent trays and the reaction trays as well as the loading opening are elements surrounded by one single housing. However, in some embodiments, the housing is composed of physically separable units, one of which comprising the sample tray and the loading opening, and the other units comprising a combination of a reagent tray and a reaction tray and one measuring device, respectively.

The physically separate units have individual housings, said housings being designed for being fixedly assembled to form a compact analysis apparatus having the sample tray, the at least two reagent trays, the at least two reaction trays and the at least two measuring devices arranged on the top of the compact analysis apparatus. Preferably, there is provided a cover hood hingedly arranged on top of the compact analysis apparatus, wherein said cover hood covers the entire top of the analysis apparatus, i.e. including all of its units.

In some specific embodiments, there is a combination of one immunoassay unit and one clinical chemistry unit. In other embodiments, there are two immunoassay units or two clinical chemistry units combined. In some embodiments, there are 3, 4, 5, 6, 7 or even 8 units combined, wherein for every combination of two units there is provided one loading zone serving said combination of two units.

In preferred embodiments the devices are arranged in the analyzer by complying with at least one of the following rules of symmetry:
- referring to the side walls of the analyzer housing, the axis of rotation of the sample disc is on the centerline between the side walls,
- referring to the side walls of the analyzer housing, the centerline of the loading opening is on the centerline between the side walls,
- the central position of the robotic arm is on the centerline of the loading opening,
- the axis of rotation of a first reagent disc on the one side and a second reagent disc on the other side is at the same distance referring to the centerline between the side walls of the analyzer housing,
- the axis of rotation of a first reaction disc or transport ring on the one side and a second reaction disc or transport ring on the other side is at the same distance referring to the centerline between the side walls of the analyzer housing,
- the axis of rotation of a first swiveling pipetting device between a first reagent disc and the corresponding reaction disc/ring on the one side and the axis of rotation of a second swiveling pipetting device between a second reagent disc and the corresponding reaction disc/ring on the other side is at the same distance referring to the centerline between the side walls of the analyzer housing,
- the axis of rotation of a first swiveling pipetting device between the sample tray and a first reaction disc/ring on the one side and the axis of rotation of a second swiveling pipetting device between the sample tray and a second reaction disc/ring on the other side is at the same distance referring to the centerline between the side walls of the analyzer housing.

Having the devices arranged in the analyzer by complying with one or more of the following rules of symmetry allows readily replacing an immunoassay unit by a clinical chemistry unit and *vice versa.*

In those cases, where the sample tray is a sample disc, the diameter of said disc is in the range of from 30 to 60 cm. In those cases, where the reagent tray is a reagent disc, the diameter of said disc is in the range of from 30 to 60 cm. In those cases, where the reaction tray is a reaction disc/ring, the diameter of said disc is in the range of from 30 to 60 cm.

In order to minimize the size of the disclosed analyzer the reaction trays are arranged adjacent to the central sample disc and the reagent discs are arranged adjacent to the reaction trays. The term "adjacent" is to be understood in the sense of defining the shortest distance between the outer edge of two devices, wherein said distance shall be in the range of from 5 to 15 cm, preferably in the range of from 5 to 10 cm.

According to the present specification, the pipetting devices are either located between the sample tray and each reaction tray or between each reagent tray and the corresponding reaction tray. The term "between" is to be understood in the sense of defining that the working zone of a pipetting device located between two devices allows moving to containers in both of said two devices.

In preferred embodiments having swiveling pipetting devices the working zone of the swiveling pipetting devices has a radius in the range of 5 to 15 cm. Within this radius, the pipetting needle of a pipetting device being located between e.g. the sample disc and a reaction disc can be moved to both, the sample containers in the sample disc and the reaction vessels in the reaction disc.

### Second aspect: Static reaction ring (present invention according to claim 1)

When performing immunoassays, it is required to have the reaction mixture incubated at defined conditions in order to give time for reacting of the target molecules with the antibodies. Incubation is particularly performed at specified temperature conditions. Therefore, reaction vessels containing the reaction mixture are usually put in a tempered incubator for a specific time.

According to the present invention, there is provided an analyzer including an immunoassays unit, wherein incubation is effected in a reaction tray, which is provided in the form of a static reaction ring. Said static reaction ring has incubation slots for receiving the reaction vessels, wherein said slots are circumferentially arranged side-by-side on the ring. Outside said static reaction ring, there is concentrically arranged a transport ring having at least one transport slot for receiving and transporting a reaction vessel, wherein said slot is arranged on the same level as the slots in the static reaction ring. The transport ring has at least one pusher for transferring a reaction vessel from the at least one transport slot in the transport ring to one of the incubation slots in the static reaction ring and back by horizontal movement on a radial axis of the reaction ring.

According to a preferred embodiment of the present invention, the slots in the static reaction ring are made of metal. Preferably, the static reaction ring is one piece of metal, having the slots for receiving the reaction vessels as integral part thereof.

In a specific embodiment of the present invention, the static reaction ring has one single line of slots being circumferentially arranged side-by-side at the outer circumferential edge of the ring. In an alternative embodiment, the static reaction ring has a first line of slots being circumferentially arranged side-by-side on the outer circumferential edge of the ring and a second line of slots being circumferentially arranged side-by-side adjacent in the direction to the central axis of the ring.

In order to temper a static reaction ring, there is provided a heating device for heating the metallic slots or the single piece metallic ring including the slots as integral part thereof. The heating device has means for controlling and maintaining the temperature of the static reaction ring in the range of from 20 to 50°C.

In some embodiments, the reaction vessels are cuvettes with a base area having a long side and a short side, wherein the long side of each of the cuvettes is oriented along a radial axis of the reaction disc. Therefore, the slots in the static reaction ring have their long side oriented along a radial axis of the static reaction ring.

The transport ring is rotatably arranged around the static reaction ring, and said transport ring has 1, 2, 3 or 4 slots for receiving reaction vessels, and the transport ring has one pusher arranged at each slot for transferring a reaction vessel from the corresponding slot in the transport ring to one of the slots in the static reaction ring and back by horizontal movement on a radial axis of the reaction ring.

In some specific embodiments of the invention, in a radial direction outside the transport ring there is at least one external slot for receiving the reaction vessels, said external slots being on the same level as the transport slots for receiving and transporting the reaction vessels in the transport ring, such that reaction vessels can be transferred from slots in the transport ring to said external slots and back by horizontal movement on a radial axis of the transport ring. In those embodiments the transport ring has at least one pusher for transferring a reaction vessel from the at least one transport slot in the transport ring to one of the external slots back by horizontal movement on a radial axis of the reaction ring.

The afore-mentioned external slots are provided as parking positions, for further processing of the reaction mixtures inside the reaction vessels, such as for bead separation, for performing a coagulation assay, for mixing or for washing the reaction vessels.

In order to maintain the temperature in the circular static reaction ring and to avoid that the heated reaction ring warms up reaction mixtures in reaction vessels positioned in one of the external slots, there is provided a circular thermal isolation housing around the reaction ring. A cross-section of said circular isolation housing has the form of the letter "U" being upside down.

### Third aspect: Round measurement chamber (alternative solution, not claimed)

According to a third aspect of the present specification, there is provided an analysis apparatus having at least one measuring device, wherein said at least one measuring device is for measuring an optical property of a liquid sample treated with a reagent in a reaction vessel, wherein said measuring device comprises
- a rotatable transport cylinder having a cylinder wall and a cylinder top, wherein there is at least one slot in the cylinder wall for receiving a reaction vessel,
- a cylindrical housing having a cylinder wall and a cylinder top, said cylindrical housing being concentrically arranged around the transport cylinder, wherein there is at least one opening for inserting and/or ejecting a reaction vessel to or from the at least one slot in the transport cylinder,
- and
- a light detector for detecting light being emitted from a liquid in a reaction vessel being inserted in the at least one slot of the transport cylinder.

By rotation of the transport cylinder, the at least one slot for receiving the reaction vessel can be moved from a loading position to a detecting position and further to an ejecting position. In some embodiments, there is also provided at least one treating position, where a reagent is added to the reaction mixture, wherein - in the direction of movement - such treating position is between the loading position and the detecting position.

The cylindrical housing and the transport cylinder are designed in that they provide a loading opening for loading a reaction vessel into the at least one slot, when the transport cylinder is in the loading position for the at least one slot. The cylindrical housing and the transport cylinder are designed in that they provide an ejection opening for ejecting a reaction vessel from the at least one slot, when the transport cylinder is in the ejecting position for the at least one slot. Further, the cylindrical housing and the transport cylinder are designed in that - when the at least one slot is in the light detecting position - the transport cylinder holds the reaction vessel in said at least one slot in a position, which is right in front of a light opening being provided in the cylinder wall of the cylindrical housing, so that light being emitted from a liquid in the reaction vessel may pass through the light opening and reach to a light detector being arranged on the other side of the light opening.

The disclosed round measurement chamber is particularly designed for measuring an optical property of a liquid sample in cases where the light intensity to be detected is rather low and/or has to be quantified exactly. One example for an assay, where the light intensity to be detected is rather low and/or has to be quantified exactly is CLIA (Chemiluminescence Immuno Assay). In cases like this it is required to perform the measurement in absolute darkness, thereby avoiding that any photons from the outside may reach to the detector.

Specific light detectors providing the sensitivity required in cases like this may be selected from a PMT detectors having a photomultiplier tube.

The rotatable transport cylinder precisely fits in the cylindrical housing thereby resulting in a very small gap providing minimum backlash when rotating the transport cylinder in the housing.

In some embodiments, the maximum distance between the outer circumference of the transport cylinder wall and the inner circumference of the cylindrical housing wall is 1 mm or less. This is to make sure to have a light tight arrangement, so that light potentially entering at the loading position when loading a reaction vessel to the transport cylinder may reach to the light detector in the detecting position.

The number of slots in the transport cylinder wall is preferably 1, 2 or 3. In those embodiments, where there are two slots in the transport cylinder, said two slots are arranged on opposing positions on the outer circumferential edge of the transport cylinder, i.e. at an angle of 180° referring to each other. In those embodiments, where the rotatable transport cylinder has three slots for receiving a reaction vessel, said slots are preferably arranged in the cylinder wall at the outer circumferential edge of the transport cylinder at an angle of 120° referring to the respective neighbor slots.

By orienting the slots in the above-mentioned manner, the risk of having photons reaching from the loading position to the detection position is minimized. Further, the risk of having any photons reaching from the loading opening to the detection opening is minimized in preferred embodiments where vertical fins protrude upwards or downwards from horizontal surfaces of the transport cylinder and/or the cylindrical housing.

In some embodiments a number of vertical fins extend linearly and parallel to each other from one edge of the respective surface to the opposing edge of said surface. In specific embodiments a first set of vertical fins extends linearly and parallel to each other from one edge of the respective surface to the opposing edge of said surface, and a second set of fins, also extending linearly and parallel to each other from one edge of the respective surface to the opposing edge of said surface, crosses the first set of fins at an angel in the range of from 30° to 90°.

In other specific embodiments said vertical fins are in the form of concentrically arranged circles, and in very specific embodiments said vertical fins are in the form of concentrically arranged circles protruding upwards from the outer surface of the transport cylinder top and/or protruding downwards from the inner surface of the cylindrical housing top, wherein said fins are concentrically arranged around the axis of rotation of the transport cylinder.

In some embodiments the cross section of the fins is rectangular, triangular, semicircular or a combination of the same. In specific embodiments, where there are fins on to opposing surfaces, such as on both, the outer surface of the transport cylinder top and the inner surface of the cylindrical housing the fins may be designed in that they match, wherein adjacent fins are either aligned peak to peak or are engaging with each other in that peaks of the fins on the one surface reach into the gaps between the fins on the other surface and vice versa. Further embodiments are characterized in that the cylindrical housing has one loading opening for inserting a reaction vessel to a slot in the transport cylinder and one unloading opening for ejecting a reaction vessel from the at least one slot in the transport cylinder, wherein the loading opening is in the cylinder top of the cylindrical housing, and wherein the unloading opening is in the cylinder wall of the cylindrical housing.

In accompanying Figures 1 through 4:
- Figure 1: shows a perspective view from above on the top of a specific embodiment of the inventive analyzer,
- Figure 2: shows a detail of a static reaction ring of a specific embodiment of an inventive analyzer,
- Figure 3: shows a perspective view of a round measurement chamber of a specific embodiment of an analyzer, and
- Figure 4: shows the round measurement chamber of figure 3.

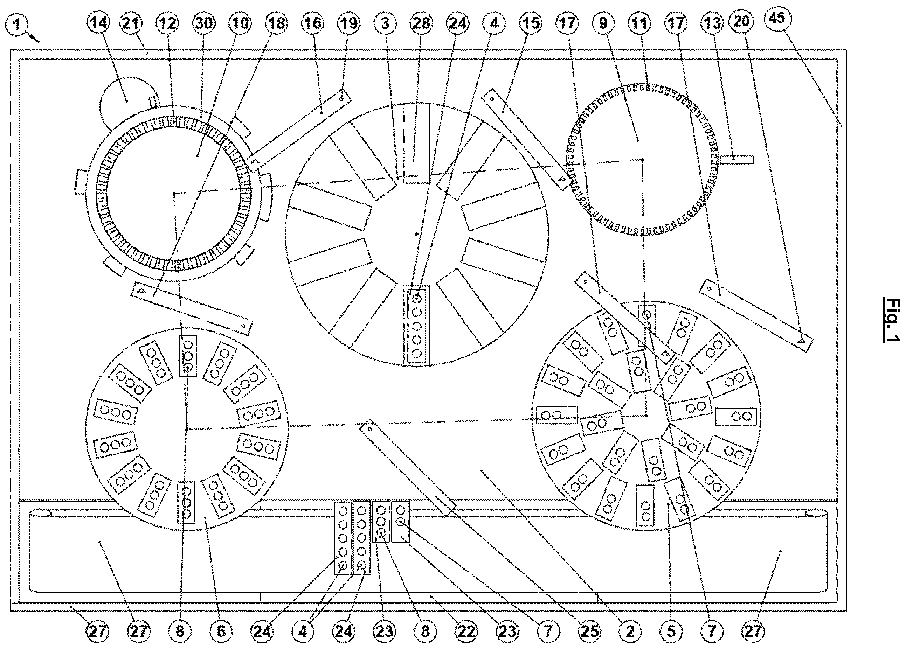

Figure 1 shows a perspective view from above on the top of a specific embodiment of the inventive analyzer 1. In the analysis area 2 of said analyzer 1 there are two reagent trays 5, 6, wherein both of said reagent trays 5, 6 are in the form of rotatable discs. Further, in the analysis area 2 there are located two reaction trays 9, 10, wherein one of said reaction trays 9 is in the form of a rotatable reaction disc and the other reaction tray 10 is in the form of a static reaction ring 10.

The rectangular formed by the dashed lines that are connecting the axes of rotation of the reagent trays 5, 6 and the axes of rotation of the reaction trays 9, 10 defines the center of the analysis area 2. The axis of rotation of the sample tray 3 crosses said center of the analysis area 2. Accordingly, the sample tray 3 is arranged in the center of the analysis area 2.

Adjacent to the sample tray 3, there are the two reagent trays 5, 6 on the right from the sample tray 3 and on the left from the sample tray 3, respectively. Further, adjacent to the sample tray 3, there are the two reaction trays 9, 10, one on the right and one on the left.

Between the sample tray 3 and each of the two reaction trays 9, 10 there are pipetting devices 15, 16. Further, between the reaction tray 9 and the reagent tray 5 there are two pipetting devices 17, and between the reaction tray 10 and the reagent tray 6 there is one pipetting device 18. The pipetting devices 15, 16 between the sample tray 3 and the reaction trays 9, 10 are for transferring liquid sample from sample containers 4 in the sample tray 3 to the reaction vessels 11, 12 in the reaction trays 9, 10. The pipetting devices 17, 18 between the reagent trays 5, 6 and the reaction trays 9, 10 are for transferring reagent from reagent containers 7, 8 in the reagent trays 5, 6 to the reaction vessels 11, 12 and the reaction trays 9, 10.

The pipetting devices 15, 16, 17, 18 are in the form of swiveling pipetting arms having an axis of rotation 19 on one end of the pipetting arm, about which the pipetting needle 20 on the other end of the pipetting arm is movable along a circular path. The axis of rotation 19 of the pipetting devices 15, 16, 17, 18 is either located between the sample disc 3 and each reaction tray 9, 10 or between each reagent tray 5, 6 and its corresponding reaction tray 9, 10.

Adjacent to each of the reaction trays 9, 10 there is a measuring device 13, 14. The measuring device 14 adjacent to the reaction tray 10 is a PMT detector having a photo multiplier tube for measuring chemiluminescence in an immuno assay. The measuring device 13 adjacent to the reaction tray 9 is a photometer for measuring the optical characteristics of a clinical chemistry reaction mixture. The sample tray 3 has receiving pockets 28 for receiving longish sample container racks 24, each container rack having five slots for receiving sample containers 4, said five slots being arranged side by side along the longitudinal axis of the racks. The receiving pockets 28 are oriented radially on the sample tray 3. In the present embodiments there are ten receiving pockets 28. Accordingly, when fully packed the sample tray 3 of this embodiment may carry ten sample container racks, each having five slots. Consequently, said sample tray 3 may carry a total of 50 sample containers at maximum.

The reagent tray 6 has 14 receiving pockets for receiving reagent container racks, each off said racks having 3 slots for receiving reagent containers 8. The reagent container racks are oriented radially on the outer circumferential edge of the disc of the reagent tray 6.

On the disc of reagent tray 5 there are 24 pockets for receiving reagent container racks 23, each off said reagent container racks having two slots for receiving reagent containers 7. The pockets for receiving the reagent container racks are arranged in two rows, one row on the outer circumferential edge of the disc of the reagent tray 5, and the other row in the center of the disc of the reagent tray 5.

The reaction tray 9 has on the outer circumferential edge of its disc about 100 slots for receiving reaction vessels 11. In the present embodiments said reaction vessels are cuvettes for photometric analysis of the reaction mixture contained therein. By rotation of the disc of the reaction tray 9 each of the reaction vessels 11 can be transported to the photometer 13 for measuring the optical properties of the reaction mixture contained therein.

The reaction tray 10 is a static reaction ring, and outside said static ring there is concentrically arranged a transport ring 30 for transporting reaction vessels 12 to and from the static reaction ring 10.

According to figure 1 the embodiment of the analyzer 1 as shown has the analysis area arranged on a plane and inside a housing 21, wherein said housing 21 has a loading opening 22 in the front wall 26 of the housing 21. Said loading opening 22 is for receiving sample containers 4 and reagent containers 7, 8 either individually or prepacked in racks 23, 24. The loading opening 22 comprises a robotic arm 25 for transporting the sample containers 4 and reagent containers 7, 8 either individually or in the form of prepacked racks 23, 24 from the loading opening 22 to the sample tray 3 or the reagent trays 5, 6. Further, the robotic arm 25 may transport sample containers from the sample tray 3 to the reagent trays 5, 6 and back. In those embodiments, where the reagent trays 5, 6 are cooled, sample racks 24 carrying sample containers filled with controls may be transferred to the reagent trays 5, 6 for cooling in order to elongate control lifetime.

In the embodiment shown the robotic arm 25 is a swiveling arm having an axis of rotation on one end of said arm, about which the other end is movable along a circular path. At the end of the arm that is on the opposite side as compared to the axis of rotation the robotic arm has an end effector for grabbing and transporting sample containers and reagent containers, either individually or in the form of prepacked racks.

The robotic arm can move along a horizontal axis from the left (where the reagent tray 6 is located) to the right (where the reaction tray 5 is located) in order to place or take reagent containers/racks or the reagent trays 5, 6 or from the reagent trays 5 or 6. Further, the robotic arm 25 can move along a vertical axis in order to pick containers/racks from the level of the loading opening 22, which is below the level of the analysis area 2 and transport the same to the level of the analysis area and to place them e.g. into the reagent trays 5 or 6.

The circular movement of the swiveling arm plus the movability along a horizontal and a vertical axis allows the robotic arm 25 to move the end effector within a working zone, and within said working zone the end effector can grab sample containers and/or reagent containers, either individually or in the form of prepacked racks, from the loading opening 22, the reagent trays 5, 6 and/or the sample tray 3, transport them from or to one of said devices and/or place them in or into one of said devices.

In the front wall 26 of the housing 21 there is provided a horizontal recess providing a conveyor 27 reaching from the left to the right and through the loading opening 22. Containers/racks that shall be loaded to the sample tray 3 and/or the reagent trays 5, 6 may be placed on the conveyor 27, wherein said conveyor 27 transports the containers/racks to the loading opening 22, where the robotic arm 25 may pick the containers/racks and bring them into the analysis area.

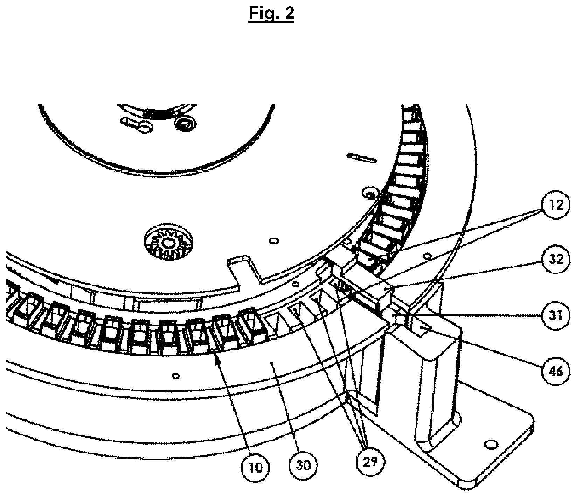

Figure 2 shows a detail of a static reaction ring 10 of a specific embodiment of an inventive analyzer 1. The static reaction ring 10 has slots 29 for receiving the reaction vessels 12, wherein said slots 29 are circumferentially arranged side-by-side on the static reaction ring 10. Outside the static reaction ring 10 there is concentrically arranged a transport ring 30 having one slot 31 for receiving a reaction vessel 12, wherein said slot 31 is arranged on the same level as the slots 29 in the static reaction ring 10. Due to this the pusher 32, which is arranged on the transport ring 30 may transfer reaction vessels 12 from the transport ring slot 31 to one of the slots 29 in the static reaction ring 10 by horizontal movement on a radial axis of the static reaction ring 10. The same pusher 32 may also remove reaction vessels 12 from slots 29 in the static reaction ring and transfer them to the transport slot 31 and the transport ring 30.

In the specific embodiment of figure 2 there is an external slot 46 outside the transport ring. Said external slot 46 is for receiving a reaction vessel, and said reaction vessel 12 may be placed in said external slot 46 by the pusher 32 by horizontal movement from either directly the transport ring 13 or by horizontal movement from the static reaction ring 10 through the transport ring 30 and to the external slot 46.

In the embodiment of figure 2 the external slot 46 is a parking position for further processing of the reaction mixture inside a reaction vessel 12 that is placed in said parking position. Said further processing may for instance be a mixing step, a magnetic bead separation step or some other further processing step.

In the specific embodiment shown the static reaction ring 10 has one single line of slots 29 being circumferentially arranged side-by-side at the outer circumferential edge of the ring.

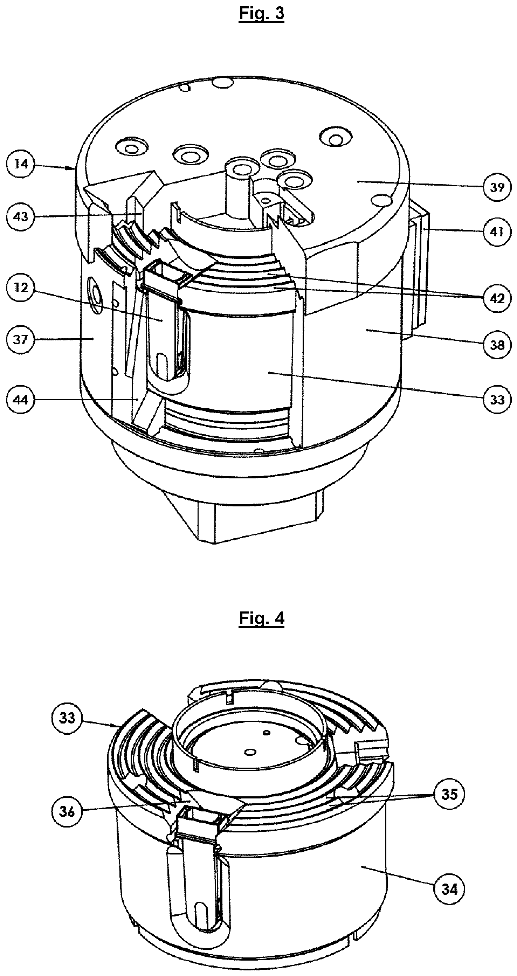

Figures 3 and 4 show a round measurement chamber according to a specific embodiment of the disclosed analyzer. Figure 3 particularly shows a perspective view of said round measurement chamber including the cylindrical housing 37, and figure 4 shows the same measurement chamber without the cylindrical housing 37.

The measuring device 14 of figures 3 and 4 is for measuring an optical property of a liquid sample treated with a reagent in a reaction vessel 12. The measuring device 14 comprises a rotatable transport cylinder 33 being encompassed by a cylindrical housing 37. On one side of the measuring device 14 there is a light detector 41 for detecting light being emitted from a liquid in the reaction vessel12 that has been inserted in one of the slots 36 of the transport cylinder 33.

The rotatable transport cylinder 33 has a cylinder wall 34 and a cylinder top 35, wherein there are three slots 36 in the cylinder wall 34 for receiving a reaction vessel 12. In the embodiment shown the three slots 36 for receiving reaction vessels 12 are arranged in the cylinder wall at an angle of 120°.

The transport cylinder 33 is rotatable and is encompassed by the cylindrical housing 37. The cylindrical housing 37 has a cylindrical housing wall 38 and a cylindrical housing top 39, and said cylindrical housing 37 is concentrically arranged around the transport cylinder 33, wherein there is one opening 43 for inserting a reaction vessel 12 to the slot 36 in the transport cylinder 33 and one opening 44 for ejecting a reaction vessel 12 from the slot 36 in the transport cylinder 33.

In the embodiment shown in figures 3 and 4 there are vertical fins 42 protruding upwards from the transport cylinder top 35. The vertical fins 42 are concentrically arranged in circles around the axis of rotation of the transport cylinder 33. Further, the fins 42 have a triangular cross-section and they do match with adjacent fins being arranged on the opposite surface of the cylindrical housing top 39. Particularly the adjacent fins are engaging with each other in that the peaks of the fins on the one surface reach into the gaps between the fins on the other surface and vice versa.

### Reference signs:

- 1: apparatus for the automated analysis of liquid samples (analyzer)
- 2: analysis area
- 3: sample tray
- 4: sample container
- 5: first reagent disc
- 6: second reagent disc
- 7: first reagent container
- 8: second reagent container
- 9: reaction disc
- 10: reaction ring
- 11: first reaction vessel
- 12: second reaction vessel
- 13: first measuring device
- 14: second measuring device
- 15: first pipetting device
- 16: second pipetting device
- 17: first pipetting device
- 18: second pipetting device
- 19: axis of rotation
- 20: pipetting needle
- 21: housing
- 22: loading opening
- 23: reagent rack
- 24: sample rack
- 25: robotic arm
- 26: front wall
- 27: conveyor
- 28: pocket for receiving a sample rack
- 29: slot for receiving a reaction vessel
- 30: transport ring
- 31: slot for receiving a reaction vessel
- 32: pusher
- 33: transport cylinder
- 34: cylinder wall
- 35: cylinder top
- 36: slot in the cylinder wall for receiving a reaction vessel
- 37: cylindrical housing
- 38: cylindrical housing wall
- 39: cylindrical housing top
- 41: light detector
- 42: vertical fin
- 43: loading opening for inserting a reaction vessel
- 44: unloading opening for ejecting a reaction vessel
- 45: side wall
- 46: external slot for receiving a reaction vessel

## Claims

1. Apparatus (1) for the automated analysis of liquid samples, wherein said apparatus comprises an analysis area (2), wherein said analysis area (2) comprises
- a sample tray (3) for receiving sample containers (4) containing at least one liquid sample,
- at least one reagent tray (5, 6) for receiving reagent containers (7, 8) containing at least one reagent,
- at least one reaction tray (9, 10) for receiving reaction vessels (11, 12),
- at least one measuring device (13, 14) for measuring a physical or chemical property of the liquid sample treated with a reagent in a reaction vessel (11, 12), and
- at least one pipetting device (15, 16) for transferring liquid sample from sample containers (4) in the sample tray (3) to the reaction vessels (11, 12) and at least one pipetting device (17, 18) for transferring reagent from reagent containers (7, 8) in the reagent tray (3) to the reaction vessels (11, 12),
**characterized in that** at least one of the at least one reaction trays is in the form of a static reaction ring (10) having slots (29) for receiving the reaction vessels (12), said slots (29) being circumferentially arranged side by side on the static reaction ring (10), wherein outside the static reaction ring (10) there is concentrically arranged a transport ring (30) having at least one slot (31) for receiving a reaction vessel (12), said slot (31) being arranged on the same level as the slots (29) in the static reaction ring (10), and wherein the transport ring (30) has at least one pusher (32) for transferring a reaction vessel (12) from the at least one slot (31) in the transport ring (30) to one of the slots (29) in the static reaction ring (10) and back by horizontal movement on a radial axis of the static reaction ring (10).

2. Apparatus according to claim 1, **characterized in that** the transport ring has one, two, three or four slots (31) for receiving reaction vessels (12) and one pusher (32) arranged at each slot (31) for transferring a reaction vessel (12) from the corresponding slot (31) in the transport ring (30) to one of the slots (29) in the static reaction ring (10) and back by horizontal movement on a radial axis of the reaction ring (10).

3. Apparatus according to one of the claims 1 and 2, **characterized in that** outside the transport ring (30) there is at least one external slot (46) for receiving a reaction vessel (12), said at least one external slot (46) being on the same level as the at least one slot (31) for receiving reaction vessels (12) in the transport ring (30) such that reaction vessels (12) can be transferred from slots (31) in the transport ring (30) to said at least one external slot (46) for receiving a reaction vessel (12) and back by horizontal movement on a radial axis of the transport ring (30).

4. Apparatus according to one of the claims 1 to 3, **characterized in that**, the slots in the static reaction ring are made of metal or the static reaction ring is one piece of metal, having the slots for receiving the reaction vessels as integral part thereof.

5. Apparatus according to claim 4, **characterized in that** the apparatus comprises a heating device for heating the metallic slots or the single piece metallic ring including the slots as integral part thereof, wherein the heating device has means for controlling and maintaining the temperature of the static reaction ring in the range of from 20 to 50°C.

6. Apparatus according to one of the claims 1 to 5, **characterized in that** the static reaction ring has one single line of slots being circumferentially arranged side-by-side at the outer circumferential edge of the ring, or the static reaction ring has a first line of slots being circumferentially arranged side-by-side on the outer circumferential edge of the ring and a second line of slots being circumferentially arranged side-by-side adjacent in the direction to the central axis of the ring.

7. Apparatus according to one of the claims 1 to 6, **characterized in that** the transport ring is rotatably arranged around the static reaction ring, wherein said transport ring has 1, 2, 3 or 4 slots for receiving reaction vessels, and said transport ring has one pusher arranged at each slot for transferring a reaction vessel from the corresponding slot in the transport ring to one of the slots in the static reaction ring and back by horizontal movement on a radial axis of the reaction ring.

8. Apparatus according to one of the claims 1 to 7, **characterized in that** in a radial direction outside the transport ring there is at least one external slot for receiving a reaction vessel, said at least one external slot being on the same level as the transport slots for receiving and transporting the reaction vessels in the transport ring, such that reaction vessels can be transferred from slots in the transport ring to said at least one external slot and back by horizontal movement on a radial axis of the transport ring, wherein there is at least one pusher for transferring a reaction vessel from the at least one transport slot in the transport ring to one of the external slots and back by horizontal movement on a radial axis of the reaction ring.

9. Apparatus according to one of the claims 1 to 8, **characterized in that** there is provided a circular thermal isolation housing around the reaction ring, wherein the cross-section of said circular isolation housing has the form of the letter "U" being upside down.

10. Apparatus according to one of the claims 1 to 9, **characterized in that** it comprises a housing (21) having a loading opening (22) for receiving sample containers (4) and reagent containers (7, 8) either individually or prepacked in racks (23, 24), wherein the loading opening (22) comprises a robotic arm (25) for transporting the sample containers (4) and reagent containers (7, 8) either individually or in the form of prepacked racks (23, 24) from the loading opening (22) to the sample tray (3) or the reagent trays (5, 6).

11. Apparatus according to claim 10, **characterized in that** the loading opening comprises a 1D code, 2D code and/or RFID reader.

12. Apparatus according to one of the claims 10 and 11, **characterized in that** it comprises a conveyor (27) for transporting sample containers and/or reagent containers either individually or in the form of prepacked racks to or from the loading opening.

13. Apparatus according to one of the claims 1 to 12, **characterized in that** the physical or chemical property measured by the at least one measuring device is a result of an immuno assay or a result of a clinical chemistry assay or a result of a coagulation assay or a result of an ion selective electrode assay.

14. Apparatus according to one of the claims 1 to 13, **characterized in that** at least one measuring device (14) is for measuring an optical property of a liquid sample treated with a reagent in a reaction vessel (12), wherein said measuring device comprises
- a rotatable transport cylinder (33) having a cylinder wall (34) and a cylinder top (35), wherein there is at least one slot (36) in the cylinder wall for receiving a reaction vessel (12),
- a cylindrical housing (37) having a cylindrical housing wall (38) and a cylindrical housing top (39), said cylindrical housing (37) being concentrically arranged around the transport cylinder (33), wherein there is at least one opening (43, 44) for inserting and/or ejecting a reaction vessel (12) to or from the at least one slot (36) in the transport cylinder (33), and
- a light detector (41) for detecting light being emitted from a liquid in a reaction vessel (12) being inserted in the at least one slot (36) of the transport cylinder (33).

15. Apparatus according to claim 14, **characterized in that** vertical fins (42) protrude upwards or downwards from horizontal surfaces of the transport cylinder (33) and/or the cylindrical housing (37).

## Patentansprüche

1. Vorrichtung (1) zur automatisierten Analyse von flüssigen Proben, wobei die Vorrichtung einen Analysebereich (2) aufweist, wobei der Analysebereich (2) Folgendes aufweist
- einen Probenträger (3) zur Aufnahme von Probenbehältern (4), die mindestens eine flüssige Probe enthalten,
- wenigstens einen Reagenzträger (5, 6) zur Aufnahme von Reagenzbehältern (7, 8), die mindestens ein Reagenz enthalten,
- wenigstens einen Reaktionsträger (9, 10) zur Aufnahme von Reaktionsgefäßen (11, 12),
- wenigstens eine Messvorrichtung (13, 14) zur Messung einer physikalischen oder chemischen Eigenschaft der mit einem Reagenz in einem Reaktionsgefäß (11, 12) behandelten flüssigen Probe, und
- wenigstens eine Pipettiervorrichtung (15, 16) zum Überführen von flüssiger Probe aus Probenbehältern (4) in dem Probenträger (3) in die Reaktionsgefäße (11, 12) und wenigstens eine Pipettiervorrichtung (17, 18) zum Überführen von Reagenz aus Reagenzbehältern (7, 8) im Reagenzträger (3) in die Reaktionsgefäße (11, 12),
**dadurch gekennzeichnet, dass** wenigstens einer von dem wenigstens einen Reaktionsträger die Form eines statischen Reaktionsrings (10) aufweist, der Fächer (29) zur Aufnahme der Reaktionsgefäße (12) aufweist, wobei die Fächer (29) am Umfang des statischen Reaktionsrings (10) nebeneinander angeordnet sind, wobei außerhalb des statischen Reaktionsrings (10) konzentrisch ein Transportring (30) mit wenigstens einem Fach (31) zur Aufnahme eines Reaktionsgefäßes (12) angeordnet ist, wobei das Fach (31) auf gleicher Höhe wie die Fächer (29) im statischen Reaktionsring (10) angeordnet ist, und wobei der Transportring (30) wenigstens einen Schieber (32) zum Überführen eines Reaktionsgefäßes (12) von dem wenigstens einen Fach (31) in dem Transportring (30) zu einem der Fächer (29) in dem statischen Reaktionsring (10) und zurück durch horizontale Bewegung auf einer radialen Achse des statischen Reaktionsrings (10) aufweist.

2. Vorrichtung nach Anspruch 1, **dadurch gekennzeichnet, dass** der Transportring eines, zwei, drei oder vier Fächer (31) zur Aufnahme von Reaktionsgefäßen (12) aufweist und einen an jedem Fach (31) angeordneten Schieber (32) zum Überführen eines Reaktionsgefäßes (12) aus dem entsprechenden Fach (31) im Transportring (30) in einen der Fächer (29) im statischen Reaktionsring (10) und zurück durch horizontale Bewegung auf einer radiale Achse des Reaktionsrings (10).

3. Vorrichtung nach einem der Ansprüche 1 und 2, **dadurch gekennzeichnet, dass** außerhalb des Transportrings (30) wenigstens ein äußeres Fach (46) zur Aufnahme eines Reaktionsgefäßes (12) vorhanden ist, wobei das wenigstens eine äußere Fach (46) auf der gleichen Höhe wie das wenigstens eine Fach (31) zur Aufnahme von Reaktionsgefäßen (12) im Transportring (30) liegt, so dass Reaktionsgefäße (12) durch horizontale Bewegung auf einer radialen Achse des Transportrings (30) von Fächern (31) im Transportring (30) zu dem wenigstens einen äußeren Fach (46) zur Aufnahme eines Reaktionsgefäßes (12) und zurück überführt werden können.

4. Vorrichtung nach einem der Ansprüche 1 bis 3, **dadurch gekennzeichnet, dass** die Fächer in dem statischen Reaktionsring aus Metall bestehen oder der statische Reaktionsring ein Stück Metall ist, das die Fächer zur Aufnahme der Reaktionsgefäße als integralen Bestandteil aufweist.

5. Vorrichtung nach Anspruch 4, **dadurch gekennzeichnet, dass** die Vorrichtung eine Heizvorrichtung zum Erwärmen der Metallfächer oder des einteiligen Metallrings mit den Fächern als integralem Bestandteil umfasst, wobei die Heizvorrichtung Mittel zum Steuern und Aufrechterhalten der Temperatur des statischen Reaktionsrings im Bereich von 20 bis 50 °C aufweist.

6. Vorrichtung nach einem der Ansprüche 1 bis 5, **dadurch gekennzeichnet, dass** der statische Reaktionsring eine einzige Reihe von Fächern aufweist, die am äußeren Umfangsrand des Rings nebeneinander angeordnet sind, oder dass der statische Reaktionsring eine erste Reihe von Fächern aufweist, die am äußeren Umfangsrand des Rings nebeneinander angeordnet sind, und eine zweite benachbarte Reihe von Fächern, die in Richtung der Mittelachse des Rings nebeneinander angeordnet sind.

7. Vorrichtung nach einem der Ansprüche 1 bis 6, **dadurch gekennzeichnet, dass** der Transportring um den statischen Reaktionsring drehbar angeordnet ist, wobei der Transportring 1, 2, 3 oder 4 Fächer zur Aufnahme von Reaktionsgefäßen aufweist und der Transportring an jedem Fach einen Schieber aufweist, um ein Reaktionsgefäß aus dem entsprechenden Fach im Transportring durch horizontale Bewegung auf einer radialen Achse des Reaktionsrings in eines der Fächer im statischen Reaktionsring und zurück zu überführen.

8. Vorrichtung nach einem der Ansprüche 1 bis 7, **dadurch gekennzeichnet, dass** in einer radialen Richtung außerhalb des Transportrings wenigstens ein äußeres Fach zur Aufnahme eines Reaktionsgefäßes vorhanden ist, wobei das wenigstens eine äußere Fach auf der gleichen Höhe wie die Transportfächer zur Aufnahme und zum Transport der Reaktionsgefäße im Transportring liegt, so dass Reaktionsgefäße durch horizontale Bewegung auf einer radialen Achse des Transportrings von Fächern im Transportring zu dem wenigstens einen äußeren Fach und zurück überführt werden können, wobei mindestens ein Schieber vorhanden ist, um ein Reaktionsgefäß durch horizontale Bewegung auf einer radialen Achse des Reaktionsrings von dem mindestens einen Transportfach in dem Transportring zu einem der äußeren Fächer und zurück zu transportieren.

9. Vorrichtung nach einem der Ansprüche 1 bis 8, **dadurch gekennzeichnet, dass** ein kreisförmiges Wärmeisoliergehäuse um den Reaktionsring herum vorgesehen ist, wobei der Querschnitt des kreisförmigen Isoliergehäuses die Form eines auf dem Kopf stehenden Buchstabens "U" hat.

10. Vorrichtung nach einem der Ansprüche 1 bis 9, **dadurch gekennzeichnet, dass** sie ein Gehäuse (21) mit einer Ladeöffnung (22) zur Aufnahme von Probenbehältern (4) und Reagenzbehältern (7, 8) entweder einzeln oder vorverpackt in Gestellen (23, 24) aufweist, wobei die Ladeöffnung (22) einen Roboterarm (25) zum Transportieren der Probenbehälter (4) und Reagenzbehälter (7, 8) entweder einzeln oder in Form von vorverpackten Gestellen (23, 24) von der Ladeöffnung (22) zum Probenträger (3) oder zu den Reagenzträgern (5, 6) umfasst.

11. Vorrichtung nach Anspruch 10, **dadurch gekennzeichnet, dass** die Ladeöffnung einen 1D-Code-, 2D-Code- und/oder einen RFID-Leser aufweist.

12. Vorrichtung nach einem der Ansprüche 10 und 11, **dadurch gekennzeichnet, dass** sie eine Fördereinrichtung (27) zum Transport von Probenbehältern und/oder Reagenzbehältern entweder einzeln oder in Form von vorgepackten Trägern oder Gestellen zur oder von der Ladeöffnung aufweist.

13. Vorrichtung nach einem der Ansprüche 1 bis 12, **dadurch gekennzeichnet, dass** die physikalische oder chemische Eigenschaft, die von wenigstens einer Messvorrichtung gemessen wird, ein Ergebnis eines Immunoassays oder ein Ergebnis eines klinischchemischen Assays oder ein Ergebnis eines Koagulationsassays oder ein Ergebnis eines ionenselektiven Elektrodentests ist.

14. Vorrichtung nach einem der Ansprüche 1 bis 13, **dadurch gekennzeichnet, dass** wenigstens eine der Messvorrichtungen (14) dazu dient, eine optische Eigenschaft einer mit einem Reagenz behandelten flüssigen Probe in einem Reaktionsgefäß (12) zu messen, wobei die Messvorrichtung Folgendes aufweist
- einen rotierbaren Transportzylinder (33) mit einer Zylinderwand (34) und einem Zylinderdeckel (35), wobei in der Zylinderwand wenigstens ein Fach (36) zur Aufnahme eines Reaktionsgefäßes (12) vorgesehen ist,
- ein zylindrisches Gehäuse (37) mit einer zylindrischen Gehäusewand (38) und einem zylindrischen Gehäuseoberteil (39), wobei das zylindrische Gehäuse (37) konzentrisch um den Transportzylinder (33) angeordnet ist, wobei wenigstens eine Öffnung (43, 44) zum Einführen und/oder Auswerfen eines Reaktionsgefäßes (12) in den oder aus dem wenigstens einen Fach (36) im Transportzylinder (33) vorhanden ist, und
- einen Lichtdetektor (41) zum Erfassen von Licht, das von einer Flüssigkeit in einem Reaktionsgefäß (12) emittiert wird, das in das wenigstens eine Fach (36) des Transportzylinders (33) eingesetzt ist.

15. Vorrichtung nach Anspruch 14, **dadurch gekennzeichnet, dass** von horizontalen Flächen des Transportzylinders (33) und/oder des zylindrischen Gehäuses (37) vertikale Rippen (42) nach oben oder unten vorstehen.

## Revendications

1. Appareil (1) pour l'analyse automatisée d'échantillons liquides, ledit appareil comprenant une zone d'analyse (2), la zone d'analyse (2) comprenant
- un plateau à échantillons (3) pour recevoir des contenants d'échantillon (4) contenant au moins un échantillon liquide,
- au moins un plateau à réactif (5, 6) pour recevoir des contenants de réactif (7, 8) contenant au moins un réactif,
- au moins un plateau de réaction (9, 10) pour recevoir des récipients de réaction (11, 12),
- au moins un dispositif de mesure (13, 14) pour mesurer une propriété physique ou chimique de l'échantillon liquide traité avec un réactif dans un récipient de réaction (11, 12), et
- au moins un dispositif de pipetage (15, 16) pour transférer de l'échantillon liquide de contenants d'échantillon (4) sur le plateau à échantillons (3) vers les récipients de réaction (11, 12) et au moins un dispositif de pipetage (17, 18) pour transférer du réactif des récipients de réactif (7, 8) sur le plateau à réactif (3) vers les récipients de réaction (11, 12),
**caractérisé en ce qu'**au moins un parmi lesdits au moins un plateau à réactif a la forme d'un anneau de réaction statique (10) avec des fentes (29) pour recevoir les récipients de réaction (12), lesdites fentes (29) étant agencées circonférentiellement côte à côte sur l'anneau de réaction statique (10), à l'extérieur de l'anneau de réaction statique (10) étant agencé concentriquement un anneau de transport (30) ayant au moins une fente (31) pour recevoir un récipient de réaction (12), ladite fente (31) étant agencée au même niveau que les fentes (29) dans l'anneau de réaction statique (10), et l'anneau de transport (30) ayant au moins un poussoir (32) pour transférer un récipient de réaction (12) de ladite au moins une fente (31) dans l'anneau de transport (30) à l'une des fentes (29) dans l'anneau de réaction statique (10) et en retour par déplacement horizontal sur un axe radial de l'anneau de réaction statique (10).

2. Appareil selon la revendication 1, **caractérisé en ce que** l'anneau de transport a une, deux, trois ou quatre fentes (31) pour recevoir des récipients de réaction (12) et un poussoir (32) agencé à chaque fente (31) pour transférer un récipient de réaction (12) de la fente correspondante (31) dans l'anneau de transport (30) à l'une des fentes (29) dans l'anneau de réaction statique (10) et en retour par déplacement horizontal sur un axe radial de l'anneau de réaction (10).

3. Appareil selon l'une des revendications 1 et 2, **caractérisé en ce qu'**à l'extérieur de l'anneau de transport (30) se trouve au moins une fente externe (46) pour recevoir un récipient de réaction (12), ladite au moins une fente externe (46) étant au même niveau que ladite au moins une fente (31) pour recevoir des récipients de réaction (12) dans l'anneau de transport (30) de telle sorte que les récipients de réaction (12) peuvent être transférés à partir des fentes (31) dans l'anneau de transport (30) à ladite au moins une fente externe (46) pour recevoir un récipient de réaction (12) et en retour par un déplacement horizontal sur un axe radial de l'anneau de transport (30).

4. Appareil selon l'une des revendications 1 à 3, **caractérisé en ce que** les fentes dans l'anneau de réaction statique sont faites en métal ou l'anneau de réaction statique est une pièce en métal, il a les fentes pour recevoir les récipients de réaction comme une partie intégrante de celui-ci.

5. Appareil selon la revendication 4, **caractérisé en ce que** l'appareil comprend un dispositif de chauffage pour chauffer les fentes métalliques ou l'anneau en une seule pièce avec les fentes comme partie intégrante de celui-ci, le dispositif de chauffage comprenant des moyens pour commander, et maintenir constante, la température de l'anneau de réaction statique dans la plage de 20 à 50 °C.

6. Appareil selon l'une des revendications 1 à 5, **caractérisé en ce que** l'anneau de réaction statique comprend une seule rangée de fentes agencées côte à côte sur le bord circonférentiel extérieur de l'anneau ou l'anneau de réaction statique comprend une première ligne de fentes agencées côte à côte sur le bord circonférentiel extérieur de l'anneau et une deuxième ligne de fentes agencées de façon circonférentielle côte à côte dans la direction vers l'axe central de l'anneau.

7. Appareil selon l'une des revendications 1 à 6, **caractérisé en ce que** l'anneau de transport est agencé de façon rotative autour de l'anneau de réaction statique, l'anneau de transport ayant 1, 2, 3 ou 4 fentes pour recevoir des récipients de réaction, et l'anneau de transport a un poussoir agencé à chaque fente pour transférer un récipient de réaction de la fente correspondante dans l'anneau de transport vers une des fentes dans l'anneau de réaction statique et retour par un mouvement horizontal sur un axe radial de l'anneau de réaction.

8. Appareil selon l'une des revendications 1 à 7, **caractérisé en ce que**, dans une direction vers l'extérieur de l'anneau de transport, il y a au moins une fente extérieure pour recevoir un récipient de réaction, ladite au moins une fente extérieure étant au même niveau que les fentes de transport pour recevoir et transporter les récipients de réaction dans l'anneau de transport, de façon que des récipients de réaction puissent être transférés de fentes dans l'anneau de transport vers ladite au moins une fente extérieure et retour par un mouvement horizontal sur un axe radial de l'anneau de transport, l'appareil ayant au moins un poussoir pour transférer un récipient de réaction de ladite au moins une fente de transport dans l'anneau de transport vers l'une des fentes extérieures et retour par un mouvement horizontal sur un axe radial de l'anneau de réaction.

9. Appareil selon l'une des revendications 1 à 8, **caractérisé en ce qu'**un boîtier circulaire d'isolation thermique est disposé autour de l'anneau de réaction, la section transversale dudit boîtier circulaire d'isolation ayant la forme de la lettre « U » avec la tête en bas.

10. Appareil selon l'une des revendications 1 à 9, **caractérisé en ce qu'**il comprend un boîtier (21) avec une ouverture de chargement (22) pour recevoir des contenants d'échantillon (4) et des contenants de réactifs (7, 8) soit individuellement soit emballés dans des supports (23, 24), l'ouverture de chargement (22) comprenant un bras de robot (25) pour transporter les contenants d'échantillon (4) et les contenants de réactifs (7, 8) soit individuellement soit sous la forme de supports préemballés (23, 24) de l'ouverture de chargement (22) au plateau à échantillons (3) ou aux plateaux à réactifs (5, 6).

11. Appareil selon la revendication 10, **caractérisé en ce que** l'ouverture de chargement comprend un code 1D, un code 2D et/ou un lecteur RFID.

12. Appareil selon l'une des revendications 10 et 11, **caractérisé en ce qu'**il comprend un convoyeur (27) pour transporter des contenants d'échantillon et/ou des contenants de réactif soit individuellement, soit sous la forme de supports préemballés, vers ou depuis l'ouverture de chargement.

13. Appareil selon l'une des revendications 1 à 12, **caractérisé en ce que** la propriété physique ou chimique mesurée par ledit au moins un dispositif de mesure est un résultat d'un essai immunologique ou un résultat d'un essai chimique clinique ou un résultat d'un essai de coagulation ou un résultat d'un essai d'électrode sélective d'ions.

14. Appareil selon l'une quelconque des revendications 1 à 13, **caractérisé en ce qu'**au moins un dispositif de mesure (14) est destiné à mesurer une propriété optique d'un échantillon liquide traité avec un réactif dans un récipient de réaction (12), ledit dispositif de mesure comprenant
- un cylindre de transport rotatif (33) ayant une paroi de cylindre (34) et un sommet de cylindre (35), au moins une fente (36) se trouvant dans la paroi de cylindre pour recevoir un récipient de réaction (12),
- un boîtier cylindrique (37) ayant une paroi de boîtier cylindrique (38) et un sommet de boîtier cylindrique (39), ledit boîtier cylindrique (37) étant agencé concentriquement autour du cylindre de transport (33), au moins une ouverture (43, 44) existant pour insérer et/ou éjecter un récipient de réaction (12) vers ou à partir de ladite au moins une fente (36) dans le cylindre de transport (33), et
- un détecteur de lumière (41) pour détecter une lumière émise à partir d'un liquide dans un récipient de réaction (12) inséré dans la au moins une fente (36) du cylindre de transport (33).

15. Appareil selon la revendication 14, **caractérisé en ce que** des ailettes verticales (42) font saillie vers le haut ou vers le bas à partir de surfaces horizontales du cylindre de transport (33) et/ou du boîtier cylindrique (37).
